(19) **Europäisches Patentamt European Patent Office Office européen des brevets**

(11) **EP 1 745 624 B1**

(12) **EUROPEAN PATENT SPECIFICATION**

(45) Date of publication and mention of the grant of the patent:
**20.03.2013 Bulletin 2013/12**

(21) Application number: **05736800.3**

(22) Date of filing: **18.04.2005**

(51) Int Cl.:
**H04L 25/03** (2006.01)

(86) International application number:
**PCT/US2005/013157**

(87) International publication number:
**WO 2005/114934 (01.12.2005 Gazette 2005/48)**

(54) **EQUALIZER LOCK DETECTION BASED ON THE LOCATION OF THE RECEIVED SIGNAL POINTS**

ENTZERRERVERRIEGELUNGSDETEKTION AUF DER BASIS DER LOKALISIERUNG DER EMPFANGENEN SIGNALPUNKTE

DETECTION DE VERROUILLAGE D'UN EGALISEUR BASEE SUR L'EMPLACEMENT DES POINTS DE SIGNAL REÇUS

(84) Designated Contracting States:
**DE FR GB**

(30) Priority: **12.05.2004 US 570287 P**

(43) Date of publication of application:
**24.01.2007 Bulletin 2007/04**

(73) Proprietor: **Thomson Licensing 92130 Issy-les-Moulineaux (FR)**

(72) Inventors:
• **SHIUE, Dong, Chang Carmel, Indiana 46033 (US)**
• **BOUILLET, Aaron, Reel Nobelsville, Indiana 46060 (US)**

(74) Representative: **Esselin, Sophie et al Marks & Clerk France Conseils en Propriété Industrielle Immeuble Visium 22, Avenue Aristide Briand 94117 Arcueil Cedex (FR)**

(56) References cited:
**WO-A-03/090350      US-A- 5 703 526 US-B1- 6 246 722**

• **YOUNG-JO LEE ET AL: "A decision-directed blind equalization with the error variance estimation" 1997 IEEE 6TH. INTERNATIONAL CONFERENCE ON UNIVERSAL PERSONAL COMMUNICATIONS RECORD. SAN DIEGO, 12 - 16. OCT. 1997, IEEE INTERNATIONAL CONFERENCE ON UNIVERSAL PERSONAL COMMUNICATIONS, NEW YORK, IEEE, US, vol. VOL. 2 CONF. 6, 12 October 1997 (1997-10-12), pages 99-103, XP010248678 ISBN: 0-7803-3777-8**

**Description**

BACKGROUND OF THE INVENTION

The present invention generally relates to communications systems and, more particularly, to a receiver.

In modem digital communication systems like the ATSC-DTV (Advanced Television Systems Committee-Digital Television) system (e.g., see, United States Advanced Television Systems Committee, "ATSC Digital Television Standard", Document A/53, September 16, 1995 and "Guide to the Use of the ATSC Digital Television Standard", Document A/54, October 4, 1995), advanced modulation, channel coding and equalization are usually applied. In the receiver, the equalizer processes the received signal to correct for distortion and is generally a DFE (Decision Feedback Equalizer) type or some variation of it.

In order to determine whether the equalizer is properly equalizing the received signal, i.e., whether or not the equalizer has converged, or "locked", onto the received signal, the receiver typically includes a "lock detector." If the lock detector indicates that the equalizer has not converged, or is unlocked, the receiver may, e.g., reset the equalizer and restart signal acquisition.

Unfortunately, conventional equalizer lock detection methods are sensitive to noise and, as such, can generate false lock detections, which can further impact overall receiver performance.

SUMMARY OF THE INVENTION

We have observed that it is possible to further improve the accuracy of equalizer lock detection, especially in low signal-to-noise ratio (SNR) environments, by taking into account the statistical properties of the type of noise, e.g., Additive White Gaussian Noise, present on the channel. In particular, and in accordance with the principles of the invention, a receiver comprises an equalizer and a lock detector. The equalizer provides a sequence of received signal points derived from a received signal, each received signal point representing a position in a constellation space of symbols. The receiver determines equalizer lock when a number of received signal points falling within one or more outer decision regions exceeds a predetermined threshold, where the outer decision regions are regions defined in the constellation space as claimed.

BRIEF DESCRIPTION OF THE DRAWINGS

FIGs. 1 and 2 illustrate received signal probability distribution functions for different levels of noise power;

FIG. 3 shows an illustrative high-level block diagram of a receiver embodying the principles of the invention;

FIG. 4 shows an illustrative portion of a receiver embodying the principles of the invention;

FIGs. 5 and 6 show an illustrative flow charts in accordance with the principles of the invention;

FIGs. 7 and 8 further illustrate the inventive concept for a one-dimensional symbol constellation;

FIGs. 9 and 10 further illustrate the inventive concept for a two-dimensional symbol constellation; and

FIG. 11 shows another illustrative embodiment in accordance with the principles of the invention.

DETAILED DESCRIPTION

Other than the inventive concept, the elements shown in the figures are well known and will not be described in detail. Also, familiarity with television broadcasting and receivers is assumed and is not described in detail herein. For example, other than the inventive concept, familiarity with current and proposed recommendations for TV standards such as NTSC (National Television Systems Committee), PAL (Phase Alternation Lines), SECAM (SEquential Couleur Avec Memoire) and ATSC (Advanced Television Systems Committee) (ATSC) is assumed. Likewise, other than the inventive concept, transmission concepts such as eight-level vestigial sideband (8-VSB), Quadrature Amplitude Modulation (QAM), and receiver components such as a radio-frequency (RF) front-end, or receiver section, such as a low noise block, tuners, demodulators, correlators, leak integrators and squarers is assumed. Similarly, formatting and encoding methods (such as Moving Picture Expert Group (MPEG)-2 Systems Standard (ISO/IEC 13818-1)) for generating transport bit streams are well-known and not described herein. It should also be noted that the inventive concept may be implemented using conventional programming techniques, which, as such, will not be described herein. Finally, like-numbers on the figures represent similar elements.

Assuming an AWGN (Additive White Gaussian noise) transmission channel, in digital communications the demodulated received signal can be represented as

$$r(nT) = s(nT) + w(nT); \quad n = 0,1,2,3,...... \tag{1}$$

where $T$ is the sample time, $s(nT)$ is the transmitted symbol, and $w(nT)$ is the additive white Gaussian noise of the channel. As known in the art, the Gaussian distribution is defined as

$$f(x) = \frac{1}{\sigma\sqrt{2\pi}}e^{-(x-\mu)^2/2\sigma^2}, \tag{2}$$

where $\sigma^2$ is the variance and $\mu$ is the mean. The above expressions apply to both I (in-phase) and Q (quadrature) data if I and Q are statistically independent.

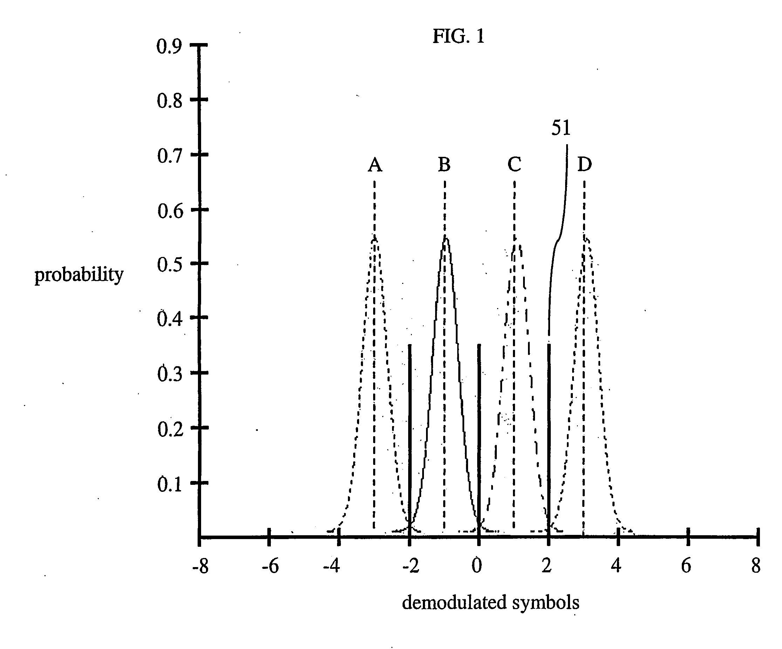

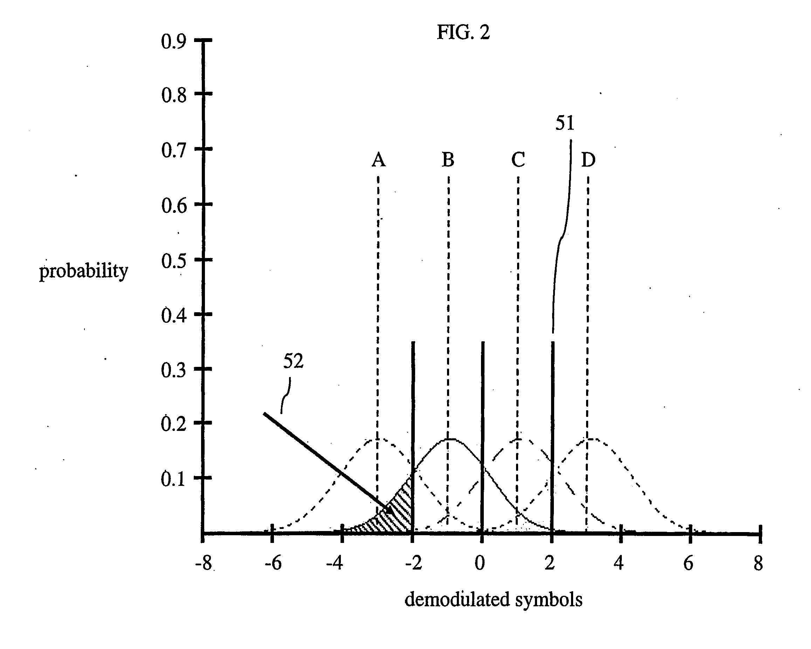

Now, for simplicity, consider a transmitter that transmits symbols taken from a constellation space comprising four symbols: A, B, C and D and that each of these symbols is assigned values, -3, -1, 1 and 3, respectively. The effect of different types of AWGN channels on this transmitted signal is shown in FIGs. 1 and 2. In particular, these figures show the resulting probability distribution function (pdf) of the demodulated received signal, $r(nT)$, for different values of noise power (variance).

Turning first to FIG. 1, this figure shows the demodulated received signal pdf for a noise power of $\sigma^2 = 0.5$. The shorter vertical solid lines of FIG. 1, as represented by line 51, are illustrative slice boundaries, for the receiver to "slice" the demodulated received signal point and thereby determine the received symbol. As known in the art, for instance from WO 2003/090350 a receiver performs slicing (also referred to as "hard decoding") to select what symbol may actually have been transmitted. Generally, slicing selects as the received symbol that symbol geometrically closest in value to the received signal point. In the context of FIG. 1, slicing is performed according to the following rules:

$$S_{sliced} = \begin{cases} -3 & \text{if } r < -2 & \text{Symbol A received,} \\ -1 & \text{if } -2 <= r < 0 & \text{Symbol B received,} \\ 1 & \text{if } 0 <= r < 2 & \text{Symbol C received; and} \\ 3 & \text{if } r > 2 & \text{Symbol D received;} \end{cases} \tag{3}$$

where, r is the value of the received signal point (including any corruption due to noise) and $S_{sliced}$ is the corresponding selected symbol. For example, if the received signal point has a value of (-2.5), then the receiver would select symbol A as the received symbol. It can be observed from FIG. 1, that the noise power is insignificant and therefore the sliced data will almost always be right, i.e., almost always correspond to the symbol actually transmitted.

However, FIG. 2, illustrates the impact of more noise power on the transmitted signal. In particular, FIG. 2 shows the demodulated received signal pdf for a noise power of $\sigma^2 = 3.0$. Again, FIG. 2 also shows the slicing boundaries as represented by line 51. Now, it should be observed that the noise power is large enough to cause certain demodulated received signal points to cross over to the decision region of another symbol. This results in the receiver making slicing errors. For example, again assume that the received signal point has a value of (-2.5). In this case, as before, the receiver will select symbol A as the received symbol. However, now there is a higher probability that this sliced decision is wrong. As indicated by arrow 52 of FIG. 2, the shaded area shows that the receiver may be making a slicing error since there is a significant probability that symbol B may have been transmitted instead of symbol A. These slicing errors or decision errors can incur less reliable communication links and, in some cases, cause communication link to fail.

We have observed that it is possible to further improve the accuracy of equalizer lock detection, especially in low signal-to-noise ratio (SNR) environments, by taking into account the above-described statistical properties of the type of noise, e.g., Additive White Gaussian Noise, present on the channel. In particular, we have observed from FIG. 2 that a demodulated received signal point is unlikely to cross over two or more slicing boundaries. For instance, a transmitted symbol A even corrupted by noise is not likely to be misinterpreted by the receiver as symbol C or symbol D. Thus, we have further observed that the receiver is less likely to be wrong in outer regions of the constellation space versus inner regions of the constellation space. For example, in the decision region for symbol A in FIG. 2, the receiver decides that symbol A was received even though there is a probability that symbol B was actually transmitted. In contrast, consider the decision region for inner symbol C. Here, the receiver decides that symbol C was received - yet two other symbols, B or D, may actually have been transmitted. As such, in the context of FIG. 2, the receiver is less likely to be wrong in the outer symbol regions, i.e., where $r \leq 3$ and $r \geq 3$.

In view of the above, those regions where the receiver is less likely to be wrong are the regions where the equalizer lock detector should operate. Therefore, and in accordance with the principles of the invention, a receiver determines equalizer lock as a function of the distribution of received signal points in a constellation space.

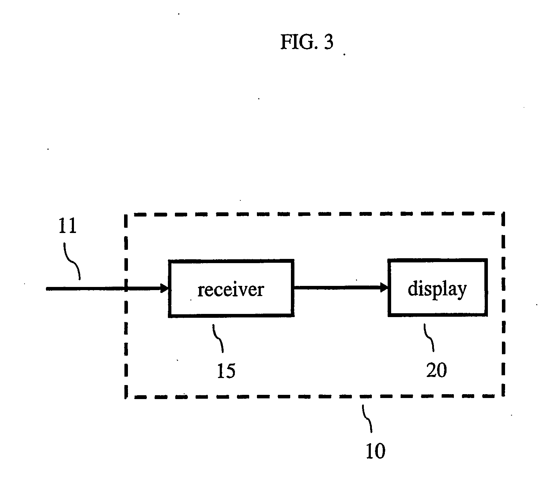

A high-level block diagram of an illustrative television set 10 in accordance with the principles of the invention is shown in FIG. 3. Television (TV) set 10 includes a receiver 15 and a display 20. Illustratively, receiver 15 is an ATSC-compatible receiver. It should be noted that receiver 15 may also be NTSC (National Television Systems Committee)-compatible, i.e., have an NTSC mode of operation and an ATSC mode of operation such that TV set 10 is capable of displaying video content from an NTSC broadcast or an ATSC broadcast. For simplicity in describing the inventive concept, only the ATSC mode of operation is described herein. Receiver 15 receives a broadcast signal 11 (e.g., via an antenna (not shown)) for processing to recover therefrom, e.g., an HDTV (high definition TV) video signal for application to display 20 for viewing video content thereon.

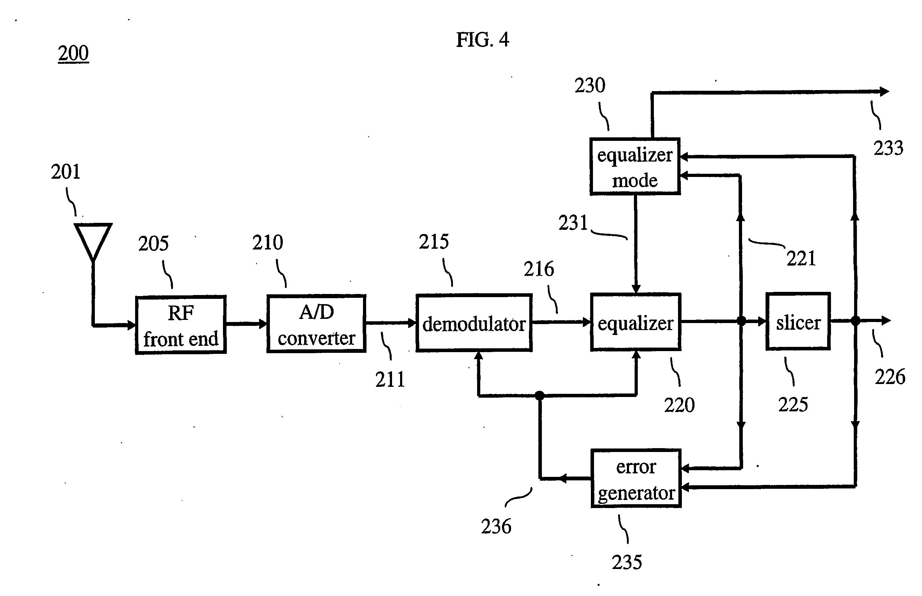

Referring now to FIG. 4, an illustrative embodiment of a portion 200 of receiver 15 in accordance with the principles of the invention is shown. Portion 200 comprises antenna 201, radio frequency (RF) front end 205, analog-to-digital (A/D) converter 210, demodulator 215, equalizer 220, slicer 225, equalizer mode element 230 and error generator 235. Other than the inventive concept, the functions of the various elements shown in FIG. 4 are well known and will only be described very briefly herein. Further, specific algorithms for adapting equalizer coefficients (not shown) of equalizer 220, such as the least-mean square (LMS) algorithm, the Constant Modulus Algorithm (CMA) and the Reduced Constellation Algorithm (RCA) are known in the art and not described herein.

RF front end 205 down-converts and filters the signal received via antenna 201 to provide a near base-band signal to A/D converter 210, which samples the down converted signal to convert the signal to the digital domain and provide a sequence of samples 211 to demodulator 215. The latter comprises automatic gain control (AGC), symbol timing recovery (STR), carrier tracking loop (CTL), and other functional blocks as known in the art for demodulating signal 211 to provide demodulated signal 216, which represents a sequence of signal points in a constellation space, to equalizer 220. The equalizer 220 processes demodulated signal 211 to correct for distortion, e.g., inter-symbol interference (ISI), etc., and provides equalized signal 221 to slicer 225, equalizer mode element 230 and error generator 235. Slicer 225 receives equalized signal 221 (which again represents a sequence of signal points in the constellation space) and makes a hard decision (as described above) as to the received symbol to provide a sequence of sliced symbols, via signal 226, occurring at a symbol rate $I/T$. Signal 226 is processed by other parts (not shown) of receiver 15, e.g., a forward error correction (FEC) element, as well as equalizer mode element 230 and error generator 235 of FIG. 4. As known in the art, error generator 235 generates one, or more, error signals 236 for use, e.g., in correcting for timing ambiguities in demodulator 215 and for adapting, or adjusting, filter (tap) coefficient values of equalizer 220. For example, error generator 235 in some instances measures the difference, or error, between equalized signal points and the respective sliced symbols for use in adapting the filter coefficients of equalizer 220. Like error generator 235, equalizer mode element 230 also receives the equalized signal points and the respective sliced symbol, via signals 221 and 226, respectively. Equalizer mode element 230 uses these signals to determine the equalizer mode, which is controlled via mode signal 231. Equalizer 220 can be operated in a blind mode (use of the CMA or RCA algorithm) or in a decision-directed mode (the LMS algorithm) as known in the art.

In addition, and in accordance with the principles of the invention, equalizer mode element 230 (also referred to herein as a lock detector) provides lock signal 233. The latter represents whether or not equalizer 220 has converged. For the sake of simplicity, the following description is limited to one- and two-dimensional symbol constellations. However, the inventive concept is not so limited and can be readily extended to multidimensional constellations.

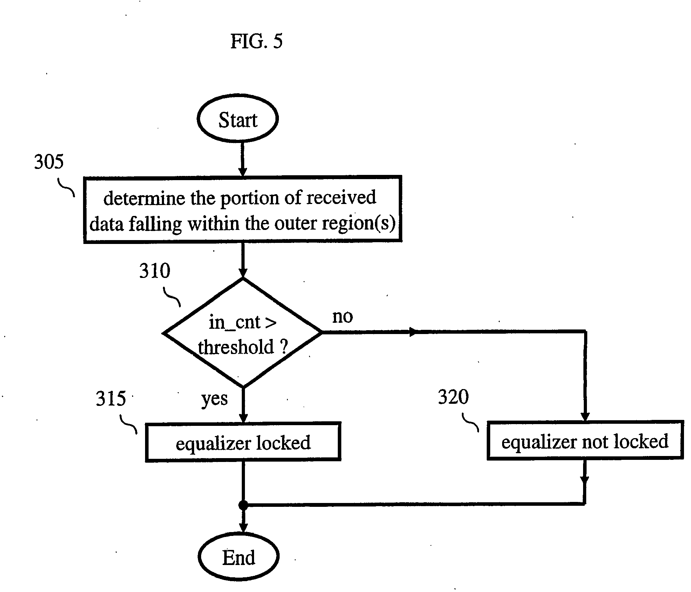

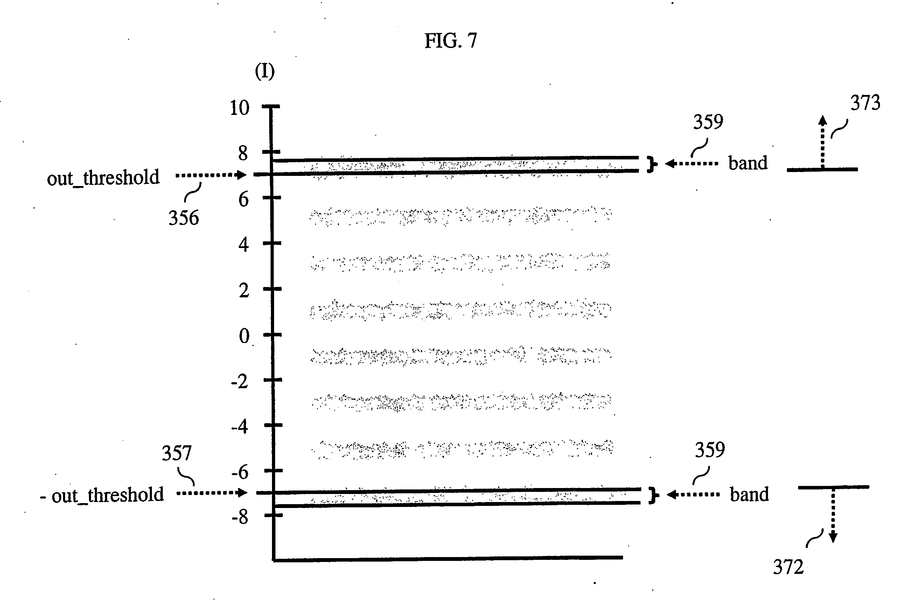

Turning now to FIG. 5, an illustrative flow chart in accordance with the principles of the invention is shown. The flow chart of FIG. 5 is, e.g., illustratively performed by equalizer mode element 230. At this point reference should also be made to FIG. 7, which illustrates operation of the inventive concept with respect to a one-dimensional M-VSB symbol constellation as known in the art, where M = 8. In particular, FIG. 7 shows a plot of the equalizer output signal 221 in a high SNR environment. As can be observed from FIG. 7, two outer regions, or *bands,* of the constellation have been defined as indicated by dotted line arrows 359. Returning to FIG. 5, in step 305, equalizer mode element 230 determines the portion of received data, or signal points, that are falling within the one, or more, outer regions of the constellation space. Illustratively, equalizer mode element 230 counts the received signals points falling within the one, or more, outer regions and stores the value of the count in a variable *"in_cnt"*. In the context of FIG. 7, equalizer mode element 230 is counting the number of received signal points falling within *bands* (359). Equalizer mode element performs step 305 over a period of time or until a number of received signal points have been received (described further below). In step 310, equalizer mode element 230 determines if the value of *in_cnt* is greater than an *in_threshold* value. If the value of *in_cnt* is not greater than the *in_threshold* value, then, in step 320, equalizer mode element 230 determines that the equalizer is not locked and provides lock signal 233 with an illustrative value representing a logical "0". In this case, not enough received signal points have fallen within the *bands* (359) shown in FIG. 7. However, if the value of *in_cnt* is greater than the *in_threshold* value - then the requisite number of received signal points have fallen within the *bands* (359) shown in FIG. 7 and, in step 315, equalizer mode element 230 determines that the equalizer is locked and provides lock signal 233 with an illustrative value representing a logical "1". For example, if a lock is declared, then equalizer 220 can be directed to go into a decision-directed mode of operation from a blind mode of operation.

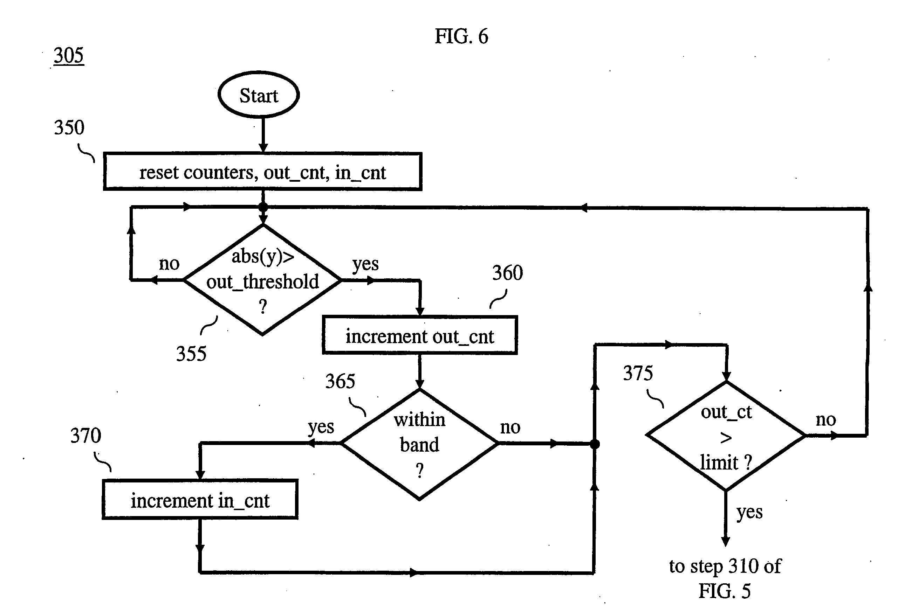

Turning now to FIG. 6, a more detailed flow chart for use in step 305 of FIG. 5 is shown. In addition to the variable of *in_cnt,* other parameters are defined: *out_cnt, out_threshold* and *y.* The variable *out_cnt* tracks the number of received signal points that fall in an outer portion of the constellation space. The boundary of one, or more, outer portions of the constellation space is indicated by the value of *out_threshold.* Again, reference to FIG. 7 for an 8-VSB symbol constellation illustrates the parameter *out_threshold.* For the 8-VSB symbol constellation, there is a positive *out_threshold,* represented by dotted arrow 356, e.g., a value of 7.0, and a negative *out_threshold,* represented by dotted arrow 357, e.g., a value of (-7.0). As such, the magnitude of *out_threshold* is 7.0. It should be noted that although the inventive concept is illustrated in the context of symmetrical values, the inventive concept is not so limited. As noted above, the value of *out_threshold* represents the start of one, or more, outer portions of the constellation space. The outer portions of the 8-VSB constellation space shown in FIG. 7 are indicated by the direction of dotted line arrows 372 and 373. Again, as can be observed from FIG. 7, the one, or more, outer portions of the constellation space include the one, or more, outer regions, or *bands* (359). Returning to FIG. 6, the value of *y* represents the equalizer output signal 221 of FIG. 4. In step 350 of FIG. 6, the counters, *out_cnt* and *in_cnt* are reset to a value of zero. In step 355, the absolute value of y, *abs(y),* is compared to the magnitude of *out_threshold* to determine if the received signal point lies in an outer portion of the constellation space. If the received signal point does not lie in an outer portion of the constellation space, then execution continues at step 355 with the next received signal point. However, if the received signal point does lie in an outer portion of the constellation space, then the value of *out_cnt* is incremented in step 360 and, in step 365, equalizer mode element 230 determines if the received signal point falls within a *band* (e.g., *bands* (359) of FIG. 7). If the received signal point does not fall within a *band,* then execution proceeds to step 375. However, if the received signal point does fall within a *band,* then the value of *in_cnt* is incremented in step 370 and execution again proceeds to step 375. In the latter step, the value of *out_cnt* is compared to a *limit* value. If the number of received signal points occurring in the outer portion of the constellation space exceed the *limit* value, then execution proceeds with step 310 of FIG. 5 to determine if equalizer 220 is locked or not locked. Otherwise, execution returns to step 355 to evaluate the next received signal point. It should be noted that the values used for *band, out_threhsold, in_threshold, limit,* etc., are programmable. As illustration, if the number of received signals falling within the *bands* exceeds 1600 *(in_threshold)* out of 2048 *(limit)* received signal points falling in the outer portion(s) of the constellation space, then the equalizer is converging and/or locked. It should also be noted that although the inventive concept was described in terms of the one, or more, outer portions of the constellation space including the one, or more, outer regions, or *bands,* the size of a region can encompass most if not all of a portion.

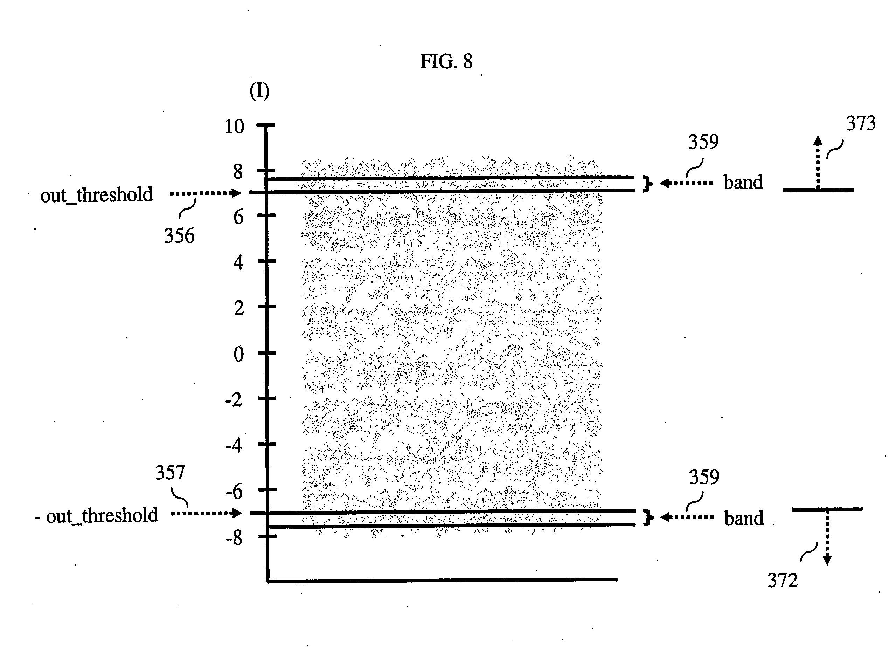

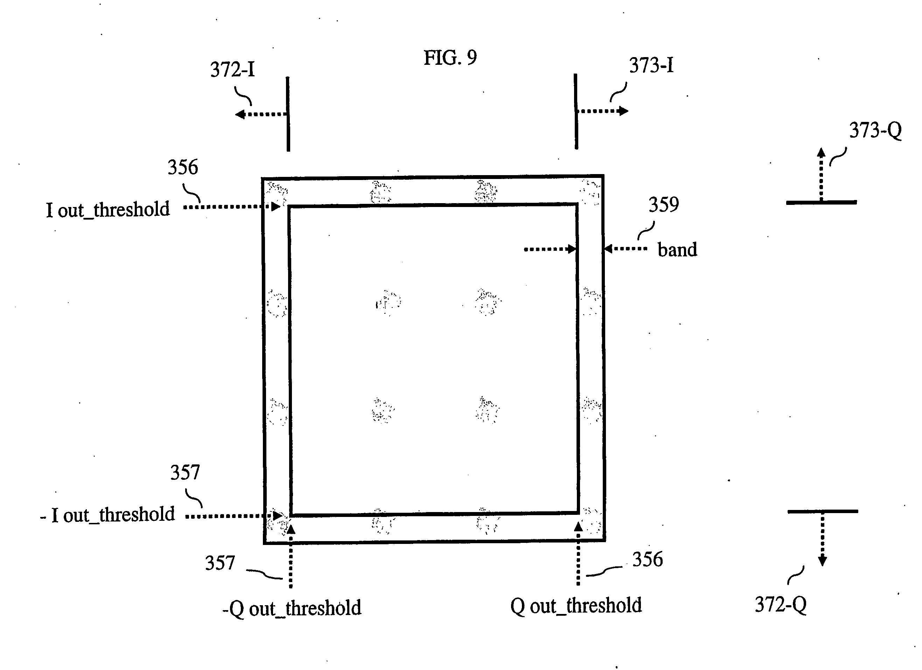

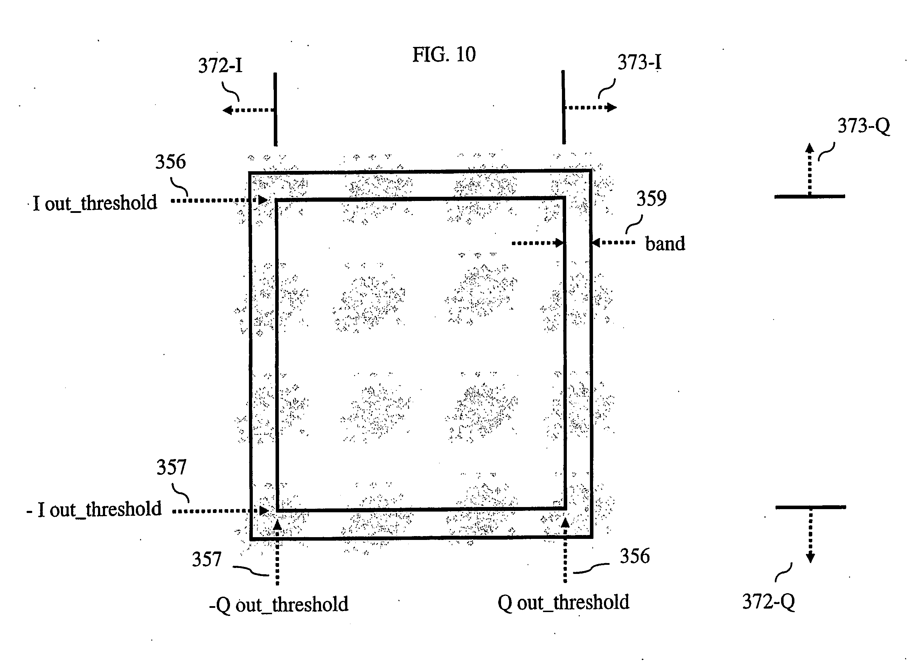

Turning briefly to FIG. 8, this figure is similar to FIG. 7, except that FIG. 8 shows a plot of the equalizer output signal 221 in a low SNR environment. Further illustrations of the inventive concept are shown in FIGs. 9 and 10. These figures illustrate plots of the equalizer output signal 221 in high SNR (FIG. 9) and low SNR (FIG. 10) environments for a two-dimensional M-QAM (quadrature amplitude modulation) symbol constellation as known in the art, where M = 16, i.e.,

$$Eq\_out_n = I_n + j* Q_{n,} \qquad (4)$$

where *Eq_out$_n$* corresponds to the earlier described *r(nT)* and is output signal 221 of equalizer 220 at a time *n, I* is the in-phase component and Q is the quadrature component. For clarity, the in-phase (I) and quadrature (Q) axes are not shown. It can be observed from FIGs. 9 and 10 that *out_thresholds* and *outer portions* of the constellation space are defined for each dimension (e.g., 372-I, 373-I, 372-Q, 373-Q, etc.). In the context of FIGs. 9 and 10, several approaches are possible. For example, with respect to the above-described flow charts of FIGs. 5 and 6, (I) and (Q) components of received signal points can be individually counted.

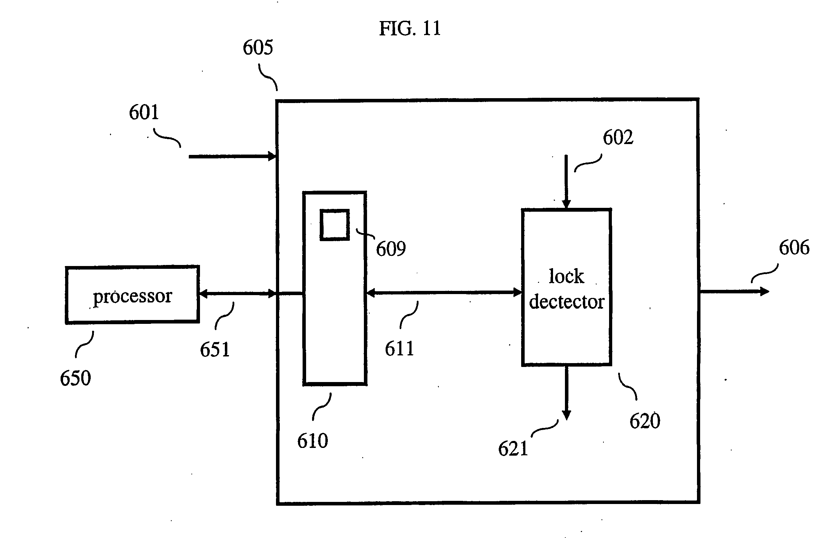

Another illustrative embodiment of the inventive concept is shown in FIG. 11. In this illustrative embodiment an integrated circuit (IC) 605 for use in a receiver (not shown) includes a lock detector 620 and at least one register 610, which is coupled to bus 651. Illustratively, IC 605 is an integrated analog/digital television decoder. However, only those portions of IC 605 relevant to the inventive concept are shown. For example, analog-digital converters, filters, decoders, etc., are not shown for simplicity. Bus 651 provides communication to, and from, other components of the receiver as represented by processor 650. Register 610 is representative of one, or more, registers, of IC 605, where each register comprises one, or more, bits as represented by bit 609. The registers, or portions thereof, of IC 605 may be read-only, write-only or read/write. In accordance with the principles of the invention, lock detector 620 includes the above-described equalizer lock detector feature, or operating mode, and at least one bit, e.g., bit 609 of register 610, is a programmable bit that can be set by, e.g., processor 650, for enabling or disabling this operating mode. In the context of FIG. 11, IC 605 receives an IF signal 601 for processing via an input pin, or lead, of IC 605. A derivative of this signal, 602, is applied to lock detector 620 for equalizer lock detection as described above. Lock detector 620 provides signal 621, which is indicative of whether or not the equalizer (not shown in FIG. 11) is locked. Although not shown in FIG. 11, signal 621 may be provided to circuitry external to IC 605 and/or be accessible via register 610. Lock detector 620 is coupled to register 610 via internal bus 611, which is representative of other signal paths and/or components of IC 605 for interfacing lock detector 620 to register 610 as known in the art (e.g., to read the earlier-described integrator and counter values). IC 605 provides one, or more, recovered signals, e.g., a composite video signal, as represented by signal 606. It should be noted that other variations of IC 605 are possible in accordance with the principles of the invention, e.g., external control of this operating mode, e.g., via bit 610, is not required and IC 605 may simply always perform the above-described processing for detecting equalizer lock.

For example, although illustrated in the context of separate functional elements, these functional elements may be embodied on one or more integrated circuits (ICs). Similarly, although shown as separate elements, any or all of the elements of may be implemented in a stored-program-controlled processor, e.g., a digital signal processor, which executes associated software, e.g., corresponding to one or more of the steps shown in, e.g., FIGs. 5 and/or 6, etc. Further, although shown as elements bundled within TV set 10, the elements therein may be distributed in different units in any combination thereof. For example, receiver 15 of FIG. 3 may be a part of a device, or box, such as a set-top box that is physically separate from the device, or box, incorporating display 20, etc. Also, it should be noted that although described in the context of terrestrial broadcast, the principles of the invention are applicable to other types of communications systems, e.g., satellite, cable, etc. It is therefore to be understood that numerous modifications may be made to the illustrative embodiments and that other arrangements may be devised without departing from the scope of the present invention as defined by the appended claims.

**Claims**

1.  A method for use in a receiver, comprising:

    providing at the output of an equalizer a sequence of received signal points (221), each received signal point representing a position in a constellation space of symbols (A,B,C,D),
    **characterized by** :

    - determining in each dimension of the constellation space, a first threshold value and a second threshold value (356, 357), each defining a boundary delimiting an outer portion of the constellation space versus an inner region in-between the boundaries, the outer portions including one or more outer decision regions (359),
    - counting a number *(in_cnt)* of received signal points falling within the outer decision regions (359) of the constellation space over a period of time or until a number of received signal points have been received,
    - determining equalizer lock when said number *(in_cnt)* exceeds a predetermined threshold (305).

2.  The method of claim 1, further comprising the step of counting a number *(out_cnt)* of received signal points falling within the outer portions, and if said number exceeds a limit value *(limit)*, performing said step of determining equalizer lock.

3.  The method of claim 1, wherein the constellation space is an M-VSB symbol constellation.

4.  The method of claim 1, wherein the constellation space is an M-QAM symbol constellation.

5.  A receiver comprising:

    a decoder (605) for processing a received signal,
    an equalizer providing, at its output, a sequence of received signal points derived from the received signal, each received signal point representing a position in a constellation space of symbols (A,B,C,D)
    wherein the decoder determines equalizer lock as a function of the received signal points;
    **characterized in that**
    the receiver comprises a processor (650) for controlling the decoder such that the decoder counts a number *(in_cnt)* of received signal points falling within one or more outer decision regions (359) of the constellation space over a period of time or until a number of received signal points have been received and determines equalizer lock, when said number *(in_cnt)* exceeds a predetermined threshold (305),
    wherein outer decision regions (359) are defined in each dimension of the constellation space with respect to a first threshold value and a second threshold value (356, 357) each defining a boundary delimiting an outer portion of the constellation space versus an inner region in-between the boundaries, and the decision regions (359) are included in the outer portions.

6. The receiver of claim 5, wherein the processor (650) further controls the decoder such that the decoder counts a number *(out-cnt)* of received signal points falling within the outer portions, and if said number exceeds a limit value *(limit),* performs said determination of equalizer lock.

7. The receiver of claim 5, wherein the constellation space is an M-VSB symbol constellation.

8. The receiver of claim 5, wherein the constellation space is an M-QAM symbol constellation.


**Patentansprüche**

1. Verfahren zur Verwendung in einem Empfänger, wobei das Verfahren umfasst:

Bereitstellen einer Folge von Empfangssignalpunkten (221) am Ausgang eines Entzerrers, wobei jeder Empfangssignalpunkt eine Position in einem Konstellationsraum von Symbolen (A, B, C, D) repräsentiert, **gekennzeichnet durch**:

- Bestimmen eines ersten Schwellenwerts und eines zweiten Schwellenwerts (356, 357), die jeweils eine Grenze definieren, die zwischen den Grenzen einen Außenabschnitt des Konstellationsraums gegenüber einem Innengebiet begrenzt, wobei die Außenabschnitte eines oder mehrere Außen-Entscheidungsgebiete (359) enthalten, in jeder Dimension des Konstellationsraums,
- Zählen einer Anzahl (in_cnt) innerhalb der Außen-Entscheidungsgebiete (359) des Konstellationsraums liegender Empfangssignalpunkte über eine Zeitdauer oder bis eine Anzahl von Empfangssignalpunkten empfangen worden sind,
- Bestimmen einer Entzerrerverriegelung, wenn die Anzahl (in_cnt) einen vorgegebenen Schwellenwert (305) übersteigt.

2. Verfahren nach Anspruch 1, das ferner den Schritt des Zählens einer Anzahl (out_cnt) von Empfangssignalpunkten, die innerhalb der Außenabschnitte liegen, und das Ausführen des Schritts des Bestimmens einer Entzerrerverriegelung, wenn die Anzahl einen Grenzwert (limit) übersteigt, umfasst.

3. Verfahren nach Anspruch 1, bei dem der Konstellationsraum eine M-VSB-Symbolkonstellation ist.

4. Verfahren nach Anspruch 1, bei dem der Konstellationsraum eine M-QAM-Symbolkonstellation ist.

5. Empfänger, der umfasst:

einen Decoder (605) zum Verarbeiten eines Empfangssignals,
einen Entzerrer, der an seinem Ausgang eine Folge aus dem Empfangssignal abgeleiteter Empfangssignalpunkte bereitstellt, wobei jeder Empfangssignalpunkt eine Position in einem Konstellationsraum von Symbolen (A, B, C, D) repräsentiert,
wobei der Decoder eine Entzerrerverriegelung als Funktion der Empfangssignalpunkte bestimmt; **dadurch gekennzeichnet, dass**
der Empfänger einen Prozessor (650) umfasst, um den Decoder in der Weise zu steuern, dass der Decoder über eine Zeitdauer oder bis eine Anzahl von Empfangssignalpunkten empfangen worden sind eine Anzahl (in_cnt) innerhalb eines oder mehrerer Außen-Entscheidungsgebiete (359) des Konstellationsraums liegender Empfangssignalpunkte zählt, und eine Entzerrerverriegelung bestimmt, wenn die Anzahl (in_cnt) einen vorgegebenen Schwellenwert (305) übersteigt,
wobei in jeder Dimension des Konstellationsraums Außen-Entscheidungsgebiete (359) in Bezug auf einen ersten Schwellenwert und auf einen zweiten Schwellenwert (356, 357), die jeweils eine Grenze definieren, die einen Außenabschnitt des Konstellationsraums gegenüber einem Innengebiet zwischen den Grenzen begrenzt, definiert sind und wobei die Entscheidungsgebiete (359) in den Außenabschnitten enthalten sind.

6. Empfänger nach Anspruch 5, bei dem der Prozessor (650) den Decoder ferner in der Weise steuert, dass der Decoder eine Anzahl (out_cnt) von Empfangssignalpunkten zählt, die innerhalb der Außenabschnitte liegen, und, falls die Anzahl einen Grenzwert (limit) übersteigt, die Bestimmung der Entzerrerverriegelung ausführt.

**7.** Empfänger nach Anspruch 5, bei dem der Konstellationsraum eine M-VSB-Symbolkonstellation ist.

**8.** Empfänger nach Anspruch 5, bei dem der Konstellationsraum eine M-QAM-Symbolkonstellation ist.


**Revendications**

**1.** Un procédé pour utilisation dans un récepteur, le procédé comprenant :

la fourniture à la sortie d'un égaliseur d'une séquence de points de signal reçus (221), chaque point de signal reçu représentant une position dans un espace de constellation de symboles (A, B, C, D),
**caractérisée par** :

- la détermination dans chaque dimension de l'espace de constellation d'une première valeur de seuil et d'une seconde valeur de seuil (356, 357), définissant chacune une limite séparant une partie externe de l'espace de constellation d'une région interne située entre les limites, les parties externes incluant une ou plusieurs régions de décision externes (359),
- le comptage d'un nombre *(in_cnt)* de points de signal reçus tombant dans les régions de décision externes (359) de l'espace de constellation pendant une période donnée ou jusqu'à ce qu'un nombre donné de points de signal reçus aient été reçus,
- la détermination du verrouillage d'un égaliseur lorsque ledit nombre *(in_cnt)* est supérieur à un seuil prédéterminé (305).

**2.** Le procédé de la revendication 1, comprenant en outre l'étape du comptage d'un nombre *(out_cnt)* de points de signal reçus tombant dans les parties externes, et si ledit nombre est supérieur à une valeur limite *(limite),* exécution de ladite étape de détermination du verrouillage de l'égaliseur.

**3.** Le procédé de la revendication 1, dans lequel l'espace de constellation est une constellation de symboles M-VSB.

**4.** Le procédé de la revendication 1, dans lequel l'espace de constellation est une constellation de symboles M-QAM.

**5.** Un récepteur comprenant :

un décodeur (605) permettant le traitement d'un signal reçu,
un égaliseur fournissant, à sa sortie, une séquence de points de signal reçus dérivés du signal reçu, chaque point de signal reçu représentant une position dans un espace de constellation de symboles (A, B, C, D)
dans lequel le décodeur détermine le verrouillage de l'égaliseur en tant que fonction des points de signal reçus ;
**caractérisé en ce que** le récepteur comprend un processeur (650) permettant de contrôler le décodeur de telle manière que le décodeur compte un nombre *(in_cnt)* de points de signal reçus tombant dans une ou plusieurs régions de décision (359) externes de l'espace de constellation pendant une période donnée ou jusqu'à ce qu'un nombre donné de points de signal reçus aient été reçus et détermine le verrouillage de l'égaliseur, lorsque ledit nombre *(in_cnt)* est supérieur à un seuil prédéterminé (305),
dans lequel les régions de décision (359) externes sont définies dans chaque dimension de l'espace de constellation par rapport à une première valeur de seuil et une seconde valeur de seuil (356, 357), chacune définissant une limite séparant une partie externe de l'espace de constellation par rapport à une région interne comprise entre les limites, et les régions de décision (359) sont incluses dans les parties externes.

**6.** Le récepteur de la revendication 5, dans lequel le processeur (650) contrôle en outre le décodeur de telle manière que de décodeur compte un nombre *(out_cnt)* de points de signal reçus tombant dans les parties externes, et si ledit nombre est supérieur à une valeur limite *(limite),* exécute ladite détermination de verrouillage de l'égaliseur.

**7.** Le récepteur de la revendication 5, dans lequel l'espace de constellation est une constellation de symboles M-VSB.

**8.** Le récepteur de la revendication 5, dans lequel l'espace de constellation est une constellation de symboles M-QAM.

FIG. 1

## FIG. 2

FIG. 3

EP 1 745 624 B1

FIG. 4

200

EP 1 745 624 B1

FIG. 5

Start

305 — determine the portion of received data falling within the outer region(s)

310 — in_cnt > threshold ?

no

yes

315 — equalizer locked

320 — equalizer not locked

End

**FIG. 6**

305

350 — reset counters, out_cnt, in_cnt

Start

355 — abs(y) > out_threshold ?

no / yes

360 — increment out_cnt

365 — within band ?

no / yes

370 — increment in_cnt

375 — out_ct > limit ?

no / yes

to step 310 of FIG. 5

FIG. 7

FIG. 8

(I)

out_threshold $\cdots\cdots\blacktriangleright$

356

357

- out_threshold $\cdots\cdots\blacktriangleright$

359

band $\cdots\cdots$

359

band

373

372

EP 1 745 624 B1

FIG. 9

FIG. 10

FIG. 11

EP 1 745 624 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003090350 A